(19) Europäisches Patentamt
European Patent Office
Office européen des brevets

(11) **EP 2 172 823 A1**

(12) **EUROPÄISCHE PATENTANMELDUNG**

(43) Veröffentlichungstag:
**07.04.2010 Patentblatt 2010/14**

(51) Int Cl.:
***G05B 23/02*** *(2006.01)*

(21) Anmeldenummer: **08017253.9**

(22) Anmeldetag: **01.10.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Kröhnert Infotecs GmbH**
**76131 Karlsruhe (DE)**

(72) Erfinder: **Kröhnert, Kai**
**76751 Gaggenau (DE)**

(74) Vertreter: **Maser, Jochen**
**Patentanwälte**
**Mammel & Maser**
**Tilsiter Strasse 3**
**71065 Sindelfingen (DE)**

Bemerkungen:
Geänderte Patentansprüche gemäss Regel 137(2) EPÜ.

# (54) Verfahren zur automatischen Bewertung von Fehlerursachen eines Betriebsgerätes

(57) Die Erfindung betrifft ein Verfahren zur automatischen Bewertung von Fehlerursachen eines Betriebsgerätes, welches folgende Schritte umfasst: Initialisieren von Fehlerursachen n, Erfassen von Fehlern m während dem Betrieb eines Betriebsgerätes mittels Sensoren und Geräten zur Erfassung von Signalen, Zuordnung der erfassten Signalen zu einzelnen, das Betriebsgerät bildenden Funktionseinheiten l, Bewerten der durch die jeweiligen Fehler m erfassten Signale jeder Funktionseinheit l des Betriebsgerätes durch Ermittlung einer Kennzahl für die Wahrscheinlichkeit des Auftretens einer Fehlerursache n des Fehlers m in der Funktionseinheit l, Ermittlung einer Kennzahl für die Bedeutung einer Fehlerursache n eines zum Ausfall führenden Fehlers m einer Funktionseinheit l, Ermittlung einer Kennzahl für die Wahrscheinlichkeit des Entdeckens einer Fehlerursache n eines Fehlers m in der Funktionseinheit l und Ausgeben eines Kennwertes für ein Ausfallrisiko des Betriebsgerätes durch eine Anzeigevorrichtung, welcher durch Multiplikation der Kennzahlen ermittelt wird.

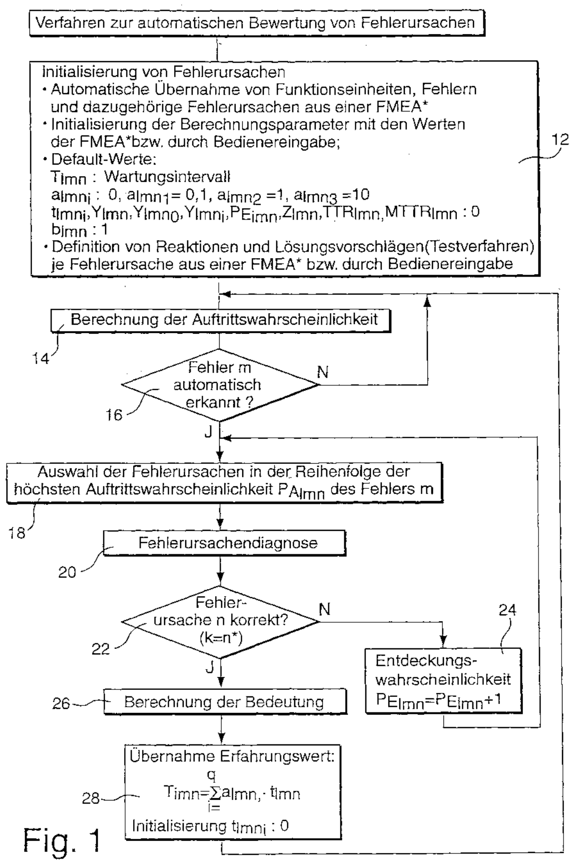

Fig. 1

EP 2 172 823 A1

## Beschreibung

Die Erfindung betrifft ein Verfahren zur automatischen Bewertung von Fehlerursachen eines Betriebsgerätes.

Für die theoretische Ermittlung von Fehlerursachen eines technischen Betriebsgerätes, wie beispielsweise einer Maschine oder einer Anlage, wird die Fehler-Möglichkeits- und Einfluss-Analyse (FMEA) nach DIN 25448 angewendet. Hieraus werden Qualitätssicherungsmaßnahmen abgeleitet, die zu einer höheren technischen Zuverlässigkeit des Betriebsgerätes führen sollen. Diese Analyse wird vorrangig während der Konstruktion und während der Fertigung des Betriebsgerätes durchgeführt. Eine Bewertung des Fehlerrisikos erfolgt durch die Berechnung einer Risikoprioritätszahl, die sich aus einer Multiplikation von drei Wahrscheinlichkeitsparametern ergibt. Hierbei handelt es sich um die Auftrittswahrscheinlichkeit einer Fehlerursache, die Bedeutung der Fehlerursache für den Betreiber des Betriebsgerätes sowie die Wahrscheinlichkeit für die Entdeckung der Fehlerursache. Die Bewertung der Wahrscheinlichkeitsparameter wird hierbei empirisch entsprechend den Erfahrungen der bewertenden Experten mit Wertezahlen von 1 bis 10 vorgenommen.

Die bislang eingesetzte Steuer- und Regeltechnik eines Betriebsgerätes überwacht zwar Fehler und Ausfallarten während des Betriebes, jedoch werden diese lediglich in einem elektronischen Buch mit dem Datum des Auftretens mit dem jeweiligen Fehlercode vermerkt. Eine objektive Bewertung der Wahrscheinlichkeitsparameter auf Basis von historisch zurück liegenden Fehlerereignissen wird jedoch nicht vorgenommen. Darüber hinaus ist eine Abschätzung des tatsächlichen Ausfallrisikos nicht gegeben.

Der Erfindung liegt deshalb die Aufgabe zugrunde, ein Verfahren zur automatischen Bewertung von Fehlerursachen eines Betriebsgerätes vorzuschlagen, welches eine vorbeugende und zustandsorientierte Instandhaltung von Betriebsgeräten ermöglicht, um eine höhere Zuverlässigkeit der Bewertung transparent und gesichert auszugeben.

Diese Aufgabe wird erfindungsgemäß durch das Verfahren gemäß den Merkmalen des Anspruchs 1 gelöst. Weitere vorteilhafte Ausgestaltungen und Weiterbildungen sind in den weiteren Ansprüchen angegeben.

Durch das erfindungsgemäße Verfahren wird ermöglicht, dass die Verwendung der theoretisch erarbeiteten Ergebnisse aus der Fehler-Möglichkeits- und Einfluss-Analyse die automatisierte Überwachung und Analyse der Fehlerursachen während des Betriebes zur Auswertung herangezogen werden, um das Entdeckungsrisiko und das daraus folgenden Schadensrisiko zu bestimmen. Dadurch können die Optimierungspotentiale für eine höhere Zuverlässigkeit für den Betrieb des Betriebsgerätes transparent und gesichert dem Betreiber oder Anwender zur Verfügung gestellt werden. Durch die Ermittlung der Auftrittswahrscheinlichkeit der Fehlerursache kann eine Beurteilung über die Zustände der Komponenteneinflüsse bestimmt werden, als eine Aussage darüber, wann mit dem Auftritt eines Schadens gerechnet werden muss. Dadurch kann eine detaillierte Beurteilung und frühzeitige Erkennung als auch eine fundierte Betrachtung des Schadensrisikos gegenüber der bislang allgemein bekannten Ermittlung der Ausfallwahrscheinlichkeit erfolgen. Die Ausfallwahrscheinlichkeit ist lediglich eine Zustandsgröße der zu betrachtenden Komponente über deren Lebensdauer, ohne dass weitere Komponenteneinflüsse berücksichtigt werden. Sofern diese jedoch mitberücksichtigt und erfasst werden, kann ein Auftreten der Fehlerursache sogar vermieden werden. Dadurch wird eine höhere Produktionssicherheit geschaffen.

Nach einer bevorzugten Ausgestaltung des Verfahrens ist vorgesehen, dass die Bewertung von Fehlerursachen stetig während dem Betrieb eines Betriebsgerätes erfasst und berechnet werden. Dadurch kann eine ganzheitliche Überwachung des Betriebsgerätes als Basis für eine effiziente und zustandsorientierte Instandhaltung des Betriebsgerätes beziehungsweise von Anlagen ermöglicht werden. Auf die stetige Überwachung aufbauende Auswertealgorithmen stellen das komplette Zustandsbild des Betriebsgerätes dar und ermöglichen somit eine vollständige Bedienerführung.

Bevorzugt ist vorgesehen, dass bei einer Initialisierung der Fehlerursache zu Beginn des Verfahrens zur Ermittlung des Ausfallrisikos eine Übernahme der Funktionseinheiten, Fehler und der zugehörigen Fehlerursachen aus einer Fehler-Möglichkeits- und Einfluss-Analyse erfolgt. Dadurch können die bislang manuell für die Bewertung von Fehlerursachen festgelegten Funktionseinheiten übernommen und anschließend überwacht werden.

Nach einer weiteren bevorzugten Ausgestaltung der Erfindung ist vorgesehen, dass die Kennzahl der Auftrittswahrscheinlichkeit in Abhängigkeit der Zeitdauer der Belastung einer Funktionseinheit innerhalb einer Belastungsklasse einer Fehlerursache eines Fehlers ermittelt wird. Dadurch sind die relevanten Parameter zur Ermittlung der Auftrittswahrscheinlichkeit zu deren Berechnung zugrunde gelegt. Durch einen Vergleich der tatsächlich vorhandenen Belastung mit einer Belastung gemäß der für die Berechnung zugrunde liegenden Belastungsklasse sowie einer nächst höheren Belastungsklasse kann eine zusätzliche Berechnung und Einschätzung für die Auftrittswahrscheinlichkeit erzielt werden. Die Auftrittswahrscheinlichkeit berechnet sich bevorzugt nach der Formel gemäß Ziffer 43 in Figur 2. Dieser Parameter wird bevorzugt gerundet und liegt innerhalb einem ganzzahligen Wertebereich von 1 bis 10.

Des Weiteren ist bevorzugt vorgesehen, dass die Kennzahl für die Wahrscheinlichkeit des Entdeckens der Fehlerursache eines Fehlers aus einem Wertebereich von 1 bis 10 ermittelt wird, der eine graduelle Einstufung für eine automatische Entdeckung der Fehlerursache mittels Sensoren und Geräten zur Erfassung von Signalen ermöglicht. Der Wert für die Wahrscheinlichkeit des Entdeckens einer Fehlerursache n eines Fehlers m wird nach Fig. 1 automatisch berechnet, wenn die Fehlerursache mit der berechneten höchsten Auftrittswahrscheinlichkeit des Fehlers m von der mittels Algorithmus der Fehlerursachendiagnose nach Fig. 3 ermittelten Fehlerursache abweicht.

Die Kennzahl für die Bedeutung einer Fehlerursache eines Fehlers steht in Abhängigkeit der mittleren Behebungszeit einer Fehlerursache eines Fehlers einer Funktionseinheit und berechnet sich bevorzugt nach der Formel gemäß Ziffer 50 in Figur 4. Dabei resultiert die mittlere Behebungsdauer aus der tatsächlichen Behebungsdauer einer Fehlerursache eines Fehlers einer Funktionseinheit, die sich aus der Anzahl von Berechnungsschritten, die beispielsweise durch eine Taktzeit festgelegt sein können, ergeben, in der das Betriebsgerät ausfällt oder nicht im Automatikbetrieb betrieben wird.

Des Weiteren ist bevorzugt vorgesehen, dass eine Diagnose von Fehlerursachen durchgeführt wird, bei der ausgehend von einem Zustandsmodell mit einer berechneten Zustandsgröße und einer gemessenen Zustandsgröße in Abhängigkeit einer Gewichtung einer Fehlerursache eines Fehlers eine Bewertungs- und Korrelationsmatrix erstellt wird. Diese Diagnose von Fehlerursachen folgt zusätzlich bevorzugt nach der Berechnung der Auftrittswahrscheinlichkeit, um festzustellen, ob ein aufgetretener Fehler tatsächlich auf die vermutete Fehlerursache zurückzuführen ist, um anschließend die Bedeutung des Ausfalls zu überprüfen und gegebenenfalls neu zu ermitteln, damit anschließend anhand des Parameters für die Bedeutung des Ausfalls wiederum die Berechnung der Auftrittswahrscheinlichkeit durchgeführt und gegebenenfalls korrigiert werden kann. Dadurch wird eine aktuelle und zustandsorientierte Überwachung ermöglicht, die dem Betreiber des Betriebsgerätes aktuelle Prozessdaten zur Verfügung stellen und somit die Bedienerführung erleichtern.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:

Figur 1 ein schematisches Ablaufdiagramm für das erfindungsgemäße Verfahren zur automatischen Bewertung von Fehlerursachen eines Betriebsgerätes,

Figur 2 ein schematisches Ablaufdiagramm für die Berechnung der Auftrittswahrscheinlichkeit einer Fehlerursache eines Fehlers,

Figur 3 ein schematisches Zustandsdiagramm für die automatische Diagnose von Fehlerursachen eines Fehlers in einer Funktionseinheit und

Figur 4 ein schematisches Ablaufdiagramm für die Berechnung der Bedeutung einer Fehlerursache eines Fehlers.

In Figur 1 ist schematisch ein Ablaufdiagramm für die automatische Bewertung von Fehlerursachen eines Betriebsgerätes dargestellt. Der Ausgangspunkt für die Durchführung des Verfahrens zur automatischen Bewertung von Fehlerursachen eines Betriebsgerätes stellt die Fehler-Möglichkeits- und Einfluss-Analyse (FMEA) dar. Diese Analyse legt Wertungskriterien zugrunde, um eine Vorhersage über in der Zukunft liegende Ausfälle eines Betriebsgerätes beziehungsweise dessen Funktionseinheiten zu ermöglichen. Bei dieser FMEA werden vorrangig während der Konstruktion und während der Fertigung von Betriebsgeräten einzelne Baugruppen oder Funktionseinheiten auf Fehlermöglichkeiten und deren Folgen analysiert. Gleichzeitig wird eine Bewertung auf theoretischer Ebene im Rahmen der Bewertungskriterien nach dem Ermessen von Experten durchgeführt, wobei eine theoretische Berechnung der Wahrscheinlichkeit des Auftretens einer Fehlerursache, die Berechnung der Bedeutung der Fehlerursache und eine Bewertung der Entdeckungswahrscheinlichkeit für die Fehlerursache durchgeführt wird. Dabei werden innerhalb eines Wertebereiches von 1 bis 10 einzelne Wertungsfaktoren zugeordnet, um daraus eine Risikoprioritätszahl zu ermitteln, welche anschließend dem Rang nach aufgeführt werden kann, um zu erkennen, welche Fehlerursache ein höheres Risiko und welche Fehlerursachen eine geringeres Risiko für den Ausfall des Betriebsgerätes darstellt.

Diese üblicherweise vorgenommene Katalogisierung von Fehlerursachen n eines Fehlers m einzelner Funktionseinheiten I von einem Betriebsgerät werden in einem ersten Verfahrensschritt 12 in ein Datenverarbeitungsprogramm zur Durchführung eines Überwachungsgerätes des Verfahrens eingelesen, um eine Grundlage für die nachfolgend durchzuführende Überwachung und automatische Bewertung zu ermöglichen. Beispielsweise kann ein Lager eine Funktionseinheit I darstellen, das überwacht werden soll. Ein dazugehöriger Fehler m kann ein Lagerbruch sein, und die dazugehörige Fehlerursache n kann beispielsweise in einer Überbeanspruchung oder einer Temperaturerhöhung liegen.

Darüber hinaus werden während der Initialisierungsphase die bislang bekannten und auf theoretischen Überlegungen basierenden Wartungsintervalle, also die charakteristische Zeitdauer bis zum Auftreten eines Fehlers m einer Funktionseinheit I durch eine Fehlerursache n, angegeben. Des Weiteren werden beispielsweise das Abnutzungsgewicht einer Belastungsklasse i einer Fehlerursache n eines Fehlers m einer Funktionseinheit I festgelegt. Ergänzend wird die Zeitdauer $t_{lmni}$ der Belastung einer Funktionseinheit I innerhalb einer Belastungsklasse i einer Fehlerursache n eines Fehlers m eingegeben. Darüber hinaus wird die Berechnungsvorschrift $y_{lmn}$ der Belastung einer Funktionseinheit l durch eine Fehlerursache n eines Fehlers m sowie des Grenzwertes $y_{lmno}$ für das Auftreten eines Fehlers m einer Funktionseinheit l durch eine Fehlerursache n als auch der obere Grenzwert $y_{lmni}$ einer Belastungsklasse i einer Fehlerursache n eines Fehlers m einer Funktionseinheit l festgelegt. Weiterhin wird der Ausgangsparameter $P_{Elmn}$ der Entdeckungswahrscheinlichkeit einer Fehlerursache n eines Fehlers m einer Funktionseinheit l festgelegt. Zusätzlich wird die Anzahl $z_{lmn}$ des Auftretens einer Fehlerursache n eines Fehlers m einer Funktionseinheit l zugrunde gelegt. Ergänzend wird die Behebungszeitdauer $TTR_{lmn}$ einer Fehlerursache n eines Fehlers m einer Funktionseinheit l sowie die mittlere Behebungszeit $MTTR_{lmn}$ einer Fehlerursache n eines Fehlers m einer Funktionseinheit l eingegeben. Die vorbeschriebenen Parameter werden bevorzugt auf 0 gesetzt. Ein Formparameter $b_{lmn}$ einer Fehlerursache n eines Fehlers m einer Funktionseinheit l, der einer Dichtefunktion einer Weibull-Verteilung entspricht, wird auf 1 gesetzt.

Vor der Initialisierung des Datenverarbeitungsprogrammes sind einzelne Sensoren oder Analysegeräte an den jeweiligen zu überwachenden Funktionseinheiten l vorgesehen und mit dem Überwachungsgerät verbunden, soweit diese dafür vorgesehen sind. Diese können zusätzliche Informationen an das Datenverarbeitungsprogramm abgeben. Des Weiteren ist das Datenverarbeitungsprogramm mit den Regel- und Steuereinheiten des Betriebsgerätes, welches zu überwachen ist, verbunden, um für das Betriebsgerät typische Daten, wie beispielsweise die Betriebsdauer oder die Stillstandszeit, an das Datenverarbeitungsprogramm weiterzuleiten.

Nachdem die Initialisierung von Fehlerursachen in einem ersten Schritt des Verfahrens für die automatische Bewertung von Fehlerursachen eines Betriebsgerätes durchgeführt wurde, wird das Betriebsgerät in Betrieb genommen, und die nachfolgend beschriebenen Arbeitsschritte werden bevorzugt stetig berechnet, um angepasst an das aktuelle Zustandsbild des Betriebsgerätes eine zustandsorientierte Ausgabe von Informationen zu ermöglichen und somit eine vorbeugende und zustandsorientierte Instandhaltung sicherzustellen.

Zunächst wird die Berechnung der Auftrittswahrscheinlichkeit im Schritt 14 durchgeführt. Diese Berechnung der Auftrittswahrscheinlichkeit wird nachfolgend anhand der Figur 2 näher erläutert werden. Sofern durch die Abfrage in einem sich an die Berechnung der Auftrittswahrscheinlichkeit sich anschließenden Schritt 16 kein Fehler m der Funktionseinheit l festgestellt wurde, wird die Berechnung der Auftrittswahrscheinlichkeit gemäß Schritt 14 erneut wiederholt, und zwar solange, bis ein Ausfall aufgetreten und der Fehler m erkannt wurde. Nachfolgend wird gemäß Schritt 18 die Auswahl der Fehlerursache n in der Reihenfolge der höchsten Auftrittswahrscheinlichkeit $P_{Almn}$ des Fehlers m durchgeführt. Anschließend wird in Schritt 20 durch eine Fehlerursachendiagnose überprüft, ob die aufgrund der Reihenfolge der höchsten Auftrittswahrscheinlichkeit des Fehlers m ausgewählte Fehlerursache n zutreffend ist. Diese Plausibilitätsprüfung wird nachfolgend in Figur 3 näher beschrieben.

Ausgehend von einer Bewertungs- und Korrelationsmatrix, die durch die Fehlerursachendiagnose ausgegeben wird, wird im nächsten Schritt 22 überprüft, ob die vorgeschlagene Fehlerursache n zutreffend war. Sofern dies nicht der Fall ist, wird die Entdeckungswahrscheinlichkeit gemäß Schritt 24 berechnet. Es wird die Fehlerursache n ermittelt, die mit der nächst höheren Wahrscheinlichkeit auftreten müsste, nachdem die ausgewählte Fehlerursache mit der höchsten Wahrscheinlichkeit aufgrund der Fehlerdiagnose nicht zutreffend war. Anschließend wird die Auswahl der Fehlerursache gemäß Schritt 18 und die nachfolgende Fehlerdiagnose gemäß Schritt 20 im Schritt 22 nochmals überprüft, und zwar solange, bis die Fehlerursachendiagnose zu einem übereinstimmenden Ergebnis mit der in Schritt 18 vorgeschlagenen Fehlerursache n kommt. Anschließend wird gemäß Schritt 26 die Berechnung der Bedeutung der Fehlerursache n durchgeführt. Dies wird nachfolgend in Figur 4 näher beschrieben. Nachdem die Kennzahl der Bedeutung der Fehlerursache n ermittelt worden ist, geht die Routine zur automatischen Bewertung von Fehlerursachen n wieder zurück zum Schritt 14, um aufgrund der ermittelten Fehlerursache n sowie dessen Entdeckungswahrscheinlichkeit und der Bedeutung erneut die Auftrittswahrscheinlichkeit zu berechnen und gegebenenfalls zu aktualisieren.

Durch eine solche fortlaufende Routine kann in eine Anzeigevorrichtung beziehungsweise einem Display, welches mit dem Überwachungsgerät immer aktualisiert die einzelnen Parameter für die Fehlerursachen n von Fehlern m einzelner Funktionseinheiten l dargestellt werden, so dass der Benutzer aufgrund des aktuell vorherrschenden Betriebszustandes des Betriebsgerätes das anstehende Ausfallrisiko eines Betriebsgerätes sowie die anstehenden gegebenenfalls präventiv vorzunehmenden Instandhaltungsarbeiten erkennen und einleiten kann. Gleichzeitig wird in der Anzeigevorrichtung die Risikoprioritätszahl einer Fehlerursache n eines Fehlers m einer Funktionseinheit l ausgegeben, welcher sich berechnet aus der Multiplikation der Parameter $P_{Almn}$ und $P_{Blmn}$ und $P_{Elmn}$.

An die Berechnung der Bedeutung der Fehlerursache n gemäß Schritt 26 schließt sich ein weiterer Schritt 28 an, der die Übernahme eines Kennwertes betrifft. Dieser Kennwert umfasst die charakteristische Zeitdauer $T_{lmn}$ bis zum Auftreten eines Fehlers m einer Funktionseinheit l durch eine Fehlerursache n, der sich berechnet aus der Summe aller Zustandsgrößen bezüglich dem jeweiligen Abnutzungsgewicht einer Belastungsklasse i einer Fehlerursache n eines Fehlers m einer Funktionseinheit l in Abhängigkeit der Zeitdauer der Belastung einer Funktionseinheit l innerhalb einer Belastungsklasse i einer Fehlerursache n eines Fehlers m. In einem ersten Schritt der Routine wird die Zeitdauer der Belastung zunächst auf 0 gesetzt. Anschließend werden die tatsächlich erfassten Zeitdauern eingesetzt. Nach der Ermittlung der charakteristischen Zeitdauer geht die Routine wieder zurück zur Berechnung der Auftrittswahrscheinlichkeit gemäß Schritt 14.

In Figur 2 sind die einzelnen Schritte zur Ermittlung der Auftrittswahrscheinlichkeit detailliert dargestellt, welche in Figur 1 dem Schritt 14 entsprechen. Die Ermittlung der Auftrittswahrscheinlichkeit einer Fehlerursache n wird dadurch eingeleitet, dass zunächst ein Schritt 31 geprüft wird, ob eine Berechnungsvorschrift vorhanden ist. Sollte eine Berechnungsvorschrift für die Belastung einer Funktionseinheit I durch eine Fehlerursache n eines Fehlers m nicht vorhanden sein, wird die Berechung gestoppt. Ist eine Berechnungsvorschrift vorhanden, wird in Schritt 33 überprüft, ob ein oberer Grenzwert einer Belastungsklasse i einer Fehlerursache n eines Fehlers m einer Funktionseinheit I vorliegt. Anschließend wird überprüft, ob dieser obere Grenzwert einer Belastungsklasse i kleiner oder gleich der Berechnungsvorschrift der Belastung einer Funktionseinheit I durch eine Fehlerursache n eines Fehlers m ist. Sollte dies der Fall sein, wird in Schritt 35 ermittelt, wie lange die Belastung in dieser vorgegebenen Klasse war. Sollte der vorherige Vergleich zu dem Ergebnis führen, dass der obere Grenzwert überschritten wurde, wird der vorstehende Vergleich mit einer höheren Belastungsklasse durchgeführt, wie dies in Schritt 37 erfolgt. Wird der obere Grenzwert überschritten, das heißt, ist die maximale Belastungsklasse i erreicht, wird dies als Schadensfall bewertet und der Parameter für die Auftrittswahrscheinlichkeit eines Fehlers m einer Funktionseinheit I durch eine Fehlerursache n mit der höchsten Kennzahl bewertet, welche beispielsweise die Ziffer 10 ist. Diese Bewertung ist in Schritt 39 dargestellt. Anschließend wird die Berechnung der Auftrittswahrscheinlichkeit beendet.

Sollte im Schritt 37 ein Vergleich der Belastungsklasse i mit der nächst höheren Belastungsklasse i+1 ergeben, dass die Belastung in die nächst höhere Belastungsklasse i+1 fällt, wird die Zeitdauer $t_{lmnq}$ der Belastung einer Funktionseinheit I in der nächst höheren Belastungsklasse i+1 einer Fehlerursache n eines Fehlers m sowie die zusätzliche Dauer $\Delta t$ eines Berechnungsschrittes ermittelt. Dies erfolgt in Schritt 41.

Anschließend wird der Parameter für die Auftrittswahrscheinlichkeit durch eine der beiden in Schritt 35 oder 41 ermittelte Zeitdauer $t_{mm1}$ oder $t_{lmnq}$ der Belastung einer Funktionseinheit I innerhalb einer Belastungsklasse i einer Fehlerursache n eines Fehlers m zur Berechnung herangezogen. Hierfür wird die Formel, welche in Schritt 43 dargestellt ist, zur Berechnung der Auftrittswahrscheinlichkeit zugrunde gelegt. Anschließend wird ein Wert innerhalb eines Wertbereiches 1 bis 10 ermittelt und als Kennzahl für die Auftrittswahrscheinlichkeit zugrunde gelegt.

In Figur 3 ist in einem Ablaufdiagramm das Verfahren für die automatischen Diagnosen von Fehlerursachen gemäß Schritt 20 in Figur 1 näher dargestellt. Die Diagnose von Fehlerursachen eines Fehlers m basiert auf einem Zustandsmodell, welches gemäß Schritt 61 zugrunde gelegt ist. Solche Zustandsmodelle können beispielsweise Differentialgleichungen einfacher oder höhere Ordnung sowie Kennfelder, funktionale Zusammenhänge (Grenzwertüberwachung) und Hüllkurvenmodelle sein. Die Eingangsgröße für das Zustandsmodell gemäß Schritt 61 ist die Berechnungsvorschrift $y_{lm}$ der Belastung einer Funktionseinheit I. Mit dem Zustandsmodell wird die Zustandsgröße eines Fehlers m einer Funktionseinheit I als Sollzustand berechnet. Durch Subtraktion des Sollzustandes $q_{lm}^*$ mit der gemessenen Ist-Zustandsgröße $q_{lm}$ wird die Zustandsabweichung $\Delta q_{lm}$ bestimmt. Die Zustandsabweichung wird entsprechend den einzelnen Gewichtungen $g_{lmn}$ von den definierten Fehlerursachen n des Fehlers m hervorgerufen, welche in Schritt 63 erfolgen. Da nicht in jedem Fall alle möglichen Fehlerursachen n definiert werden können, wird eine Fehlerursache n als Sonstige definiert. Hiermit wird sichergestellt, dass jede Zustandsabweichung auf mindestens eine Fehlerursache n zurückgeführt werden kann. Die berechneten Zustandsänderungen der Gesamtmenge der definierten Fehlerursachen n werden für die Diagnose der Fehlerursache n einer Zustandsabweichung eines Fehlers m einer Funktionseinheit I in einer Bewertungs- und Korrelationsmatrix 65 zusammen geführt. Hierin werden mittels Bewertungsalgorithmen, zum Beispiel Schwellwertüberwachungen oder logische Verknüpfungen, die relevanten Fehlerursachen bestimmt. Korrelierende Zustandsgrößen werden in die Diagnose einbezogen. Beispielsweise kann die Ursache einer Temperaturerhöhung als Zustandsänderung einer Funktionseinheit I, welche ein Lager ist, mittels entsprechender Bewertung auf eine Verschmutzung zurückgeführt werden. Diese kann über die Korrelation mit einer Filterverschmutzung einer gekoppelten Funktionseinheit I als Lagerschmiersystem bestätigt werden.

In Figur 4 ist die Ermittlung der Bedeutung einer Fehlerursache n näher dargestellt, die in Figur 1 durch Schritt 26 gekennzeichnet ist. Bei der Berechnung der Bedeutung einer Fehlerursache n wird zunächst von der Anzahl $z_{lmm}$ des Auftretens einer Fehlerursache n eines Fehlers m einer Funktionseinheit I ausgegangen, welche in Schritt 46 dargestellt ist. Dabei wird bei jedem Beginn zur Berechnung der Bedeutung die vorherige Anzahl $z_{lmm}$ des Auftretens einer Fehlerursache n um einen Zähler erhöht. Anschließend wird eine Abfrage gemäß Schritt 48 eingeleitet, ob sich das Betriebsgerät im Automatikbetrieb findet. Sofern sich das Betriebsgerät nicht im Automatikbetrieb befindet, wird die Bedeutung der Fehlerursache berechnet, da es sich dann um einen Störfall handelt. Weitere Kriterien können für die automatische Entscheidung mit einbezogen werden, die definieren, dass das Betriebsgerät gestört bzw. ausgefallen ist. Eine Berechnung findet im Schritt 50 statt, wobei zunächst die Behebungszeit $TTR_{lmn}$ einer Fehlerursache n eines Fehlers m einer Funktionseinheit I beziehungsweise eine Maschinenausfallzeit, durch die tatsächliche Behebungszeit $TTR_{lmn}$ und der Zeitdauer $\Delta t$ des Berechnungsschrittes beziehungsweise der Taktzeit berechnet wird. Darüber hinaus wird die mittlere Behebungszeit $MTTR_{lmn}$ einer Fehlerursache n eines Fehlers m einer Funktionseinheit I, aus der Behebungszeit $TTR_{lmn}$ im Verhältnis zur Anzahl $z_{lmn}$ des Auftretens einer Fehlerursache n eines Fehlers m einer Funktionseinheit I ermittelt. Daraus ergibt sich gemäß der in Figur 50 dargestellten Formel die Bedeutung der Fehlerursache $P_{Blmn}$ eine Fehlerursache n eines Fehlers m einer Funktionseinheit I für einen Gesamtmaschinenausfall beziehungsweise für den Maschinenbetreiber. Nach diesem Schritt 50 wird erneut der Schritt 48 eingeleitet. Befindet sich das Betriebsgerät im Automatikbetrieb bzw. ist die Störung des Betriebsgerätes behoben, wird anschließend der zuletzt ermittelte Wert für die Bedeutung der Fehlerursache n zugrunde gelegt, und das Verfahren für die automatische Berechnung der Bedeutung einer Fehlerursache n kehrt in das Ablaufdiagramm gemäß Figur 1 zurück beziehungsweise geht in den nachfolgenden Arbeitsgang über, welcher die erneute Berechnung einer Auftrittswahrscheinlichkeit betrifft.

Zur Durchführung des Verfahrens für die Bewertung von Fehlerursachen n ist bevorzugt ein Überwachungsgerät oder Überwachungsserver vorgesehen. Dieses umfasst universelle Prozessschnittstellen, welche mit der Steuerung des Betriebsgerätes beziehungsweise der Maschine oder Anlage gekoppelt sind. Dadurch wird ein Prozessabbild des Betriebsgerätes übermittelt und in einem Datenverarbeitungsprogramm des Überwachungsgerätes abgespeichert. Anschließend kann anhand der gespeicherten Daten des Prozessbildes das Verfahren zur automatischen Bewertung von Fehlerursachen durchgeführt werden. Aufgrund daraus erfolgender Ergebnisse kann eine Auswertung des Zustandsabbildes und Optimierungspotentiale erzielt werden. Diese Zustandsabbilder sowie Optimierungspotentiale können über universelle Schnittstellen an den Anwender oder Benutzer des Betriebsgerätes übermittelt werden. Dadurch wird der Anwender über im Betrieb auftretende und neuartige Fehlerursachen informiert. Gleichzeitig werden solche Fehlerursachen dem vorhandenen Fehlerbild über eine Bedienerführung automatisiert zugeführt. Somit wird die FMEA während eines Betriebes des Betriebsgerätes stetig vervollständigt. Zusätzlich kann vorgesehen sein, dass solche Zustandsabbilder und Optimierungspotentiale für eine höhere Zuverlässigkeit transparent und gesichert u. a. über Web-Technologien zum Anwender übertragen und diesem zur Verfügung gestellt werden können.

Die automatisierte Bewertung von Fehlerursache in Bezug auf die Auftrittswahrscheinlichkeit und die Bedeutung für einen Gesamtmaschinenausfall und deren Entdeckungswahrscheinlichkeit soll nochmals vereinfacht anhand von folgendem Beispiel erläutert werden:

> Es soll das Schadensrisiko einer Komponentenbeanspruchung wie bspw. eines Getriebes für ein Gesamtsystem oder einer Maschine ermittelt werden, wobei die Bewertung einer Fehlerursache an einer Dichtung für einen Dichtungsschaden und die Bewertung der Fehlerursache für einen Zahnradbruch in dem Zahnradgetriebe miteinander verglichen werden. Bei der Bewertung der Fehlerursache des Dichtungsschadens ist die Auftrittswahrscheinlichkeit bspw. mit einer Wertezahl 9 einzustufen, da eine hohe Belastung der Dichtung durch gemessene Öldruckstöße zu einem vorzeitigen Auftritt eines Dichtungsschadens führen kann. Die Bedeutung der Fehlerursache wird bspw. mit Wertezahl 4 eingestuft, da bspw. nur ein Wechsel eines Dichtungsringes und keine weiteren Maßnahmen für die Fehlerbeseitigung notwendig ist. Im Hinblick auf die Entdeckungswahrscheinlichkeit wird die Wertezahl 2 angesetzt, da bspw. zur Drucküberwachung ein Sensor vorhanden ist. Aus diesen Wertezahlen ergibt sich eine Risikoprioritätszahl 72 (9x4x2).
>
> Eine analoge Bewertung der Fehlerursache für ein Zahnbruch kann folgendermaßen erfolgen:
>
> > Die Auftrittswahrscheinlichkeit wird bspw. mit einer Wertezahl 5 bemessen. Einem solchen Zahnradbruch geht ein Rattern vorher, welches bspw. aufgrund einer hohen Beanspruchung der Zahnräder durch mechanische Wechselmomente verursacht wird. Die Bedeutung der Fehlerursache eines Zahnbruches wird bspw. mit der Wertezahl 10 eingestuft, da bei einem solchen Zahnradbruch die Komplettzerlegung des Getriebes für die Fehlerbeseitigung notwendig ist. Die Entdeckungswahrscheinlichkeit kann wiederum mit der Wertezahl 2 bemessen werden, da ebenfalls durch einen Sensor eine Achsdrehmomentüberwachung ermöglicht ist. Aus diesen Wertezahlen ergibt sich eine Risikoprioritätszahl 100 (5x10x2).

Aus diesem Ergebnis ist zu ersehen, dass das Schadensrisiko bei der Fehlerursache Zahnradbruch wesentlich höher als bei der Fehlerursache Dichtungsschaden ist. Als Ergebnis daraus folgt, dass die auf das Getriebe einwirkende Wechselmomente dringender zu beheben sind als der Austausch einer Dichtung. Somit ist die Wartungspriorität bei dem Zahnrad oder Getriebe höher einzustufen. Dadurch kann wiederum das Schadensrisiko wirksamer reduziert werden. Aus diesem Beispiel wird deutlich, dass die Auftrittswahrscheinlichkeit eine wesentliche Bedeutung für die Gesamteinstufung des Schadenrisikos einnimmt.

## Patentansprüche

**1.** Verfahren zur automatischen Bewertung von Fehlerursachen eines Betriebsgerätes, welches folgende Schritte umfasst:

- Initialisieren von Fehlerursachen n,
- Erfassen von Fehlern m während dem Betrieb eines Betriebsgerätes mittels Sensoren und Geräten zur Erfassung von Signalen,
- Zuordnung der erfassten Signalen zu einzelnen, das Betriebsgerät bildenden Funktionseinheiten l,
- Bewerten der durch die jeweiligen Fehler m erfassten Signale jeder Funktionseinheit l des Betriebsgerätes durch
- Ermittlung einer Kennzahl für die Wahrscheinlichkeit des Auftretens einer Fehlerursache n des Fehlers m in der Funktionseinheit l,
- Ermittlung einer Kennzahl für die Bedeutung einer Fehlerursache n eines zum Ausfall führenden Fehlers m einer Funktionseinheit l,
- Ermittlung einer Kennzahl für die Wahrscheinlichkeit des Entdeckens einer Fehlerursache n eines Fehlers m in der Funktionseinheit l und
- Ausgeben eines Kennwertes für ein Ausfallrisiko des Betriebsgerätes durch eine Anzeigevorrichtung, welcher durch Multiplikation der Kennzahlen ermittelt wird.

**2.** Verfahren nach Anspruch 1, **dadurch gekennzeichnet, dass** eine stetige Überwachung der Fehlerursachen durchgeführt wird.

**3.** Verfahren nach Anspruch 1, **dadurch gekennzeichnet, dass** bei der Initialisierung der Fehlerursachen eine Übernahme von Funktionseinheiten l, von Fehlern m und dazugehörigen Fehlerursachen n aus einer FMEA (Fehler-Möglichkeits- und Einfluss-Analyse) durchgeführt wird.

**4.** Verfahren nach Anspruch 1, **dadurch gekennzeichnet, dass** die Kennzahl der Auftrittswahrscheinlichkeit in Abhängigkeit der Zeitdauer der Belastung einer Funktionseinheit l innerhalb verschiedener Belastungsklassen i einer Fehlerursache n eines Fehlers m ermittelt wird.

**5.** Verfahren nach Anspruch 4, **dadurch gekennzeichnet, dass** die Kennzahl für die Auftrittswahrscheinlichkeit nach der Formel $P_{Almn}$ ermittelt wird.

**6.** Verfahren nach Anspruch 1, **dadurch gekennzeichnet, dass** die Kennzahl für die Wahrscheinlichkeit des Entdekkens der Einflussgröße/Fehlerursache aus einem Zahlenbereich ermittelt wird, der eine graduelle Einstufung für eine automatische Entdeckung mittels Sensoren und Geräten zur Erfassung von Signalen umfasst.

**7.** Verfahren nach Anspruch 1, **dadurch gekennzeichnet, dass** die Wahrscheinlichkeit des Entdeckens einer Fehlerursache n eines Fehlers m in Abhängigkeit der Übereinstimmung der Fehlerursachen n mit der berechneten höchsten Auftrittswahrscheinlichkeit des Fehlers m mit der mittels Algorithmus der Fehlerursachendiagnose ermittelten Fehlerursache n berechnet wird.

**8.** Verfahren nach Anspruch 1, **dadurch gekennzeichnet, dass** die Kennzahl für die Bedeutung der Fehlerursache n in Abhängigkeit der mittleren Behebungszeit $MTTR_{lmn}$ einer Fehlerursache n gesetzt wird.

**9.** Verfahren nach Anspruch 1, **dadurch gekennzeichnet, dass** eine Diagnose von Fehlerursachen durchgeführt, bei der ausgehend von einem Zustandsmodell mit einer berechneten Zustandsgröße $q_{lm}$ und einer gemessenen Zustandsgröße in Abhängigkeit $g_{lm}$ einer Gewichtung einer Fehlerursache n durchgeführt wird.

**Geänderte Patentansprüche gemäss Regel 137(2) EPÜ.**

**1.** Verfahren zur automatischen Bewertung von Fehlerursachen eines Betriebsgerätes, welches folgende Schritte umfasst:

- Initialisieren von Fehlerursachen n,
- Erfassen von Fehlern m während dem Betrieb eines Betriebsgerätes mittels Sensoren und Geräten zur Erfassung von Signalen,
- Zuordnung der erfassten Signalen zu einzelnen, das Betriebsgerät bildenden Funktionseinheiten l,
- Bewerten der erfassten Signale jeder Funktionseinheit l des Betriebsgerätes durch
- Ermittlung einer Kennzahl für die Wahrscheinlichkeit des Auftretens einer Fehlerursache n des Fehlers m in der Funktionseinheit l,
- Ermittlung einer Kennzahl für die Bedeutung einer Fehlerursache n eines zum Ausfall führenden Fehlers m einer Funktionseinheit l,

- Ermittlung einer Kennzahl für die Wahrscheinlichkeit des Entdeckens einer Fehlerursache n eines Fehlers m in der Funktionseinheit l und
- Ausgeben eines Kennwertes für ein Ausfallrisiko des Betriebsgerätes durch eine Anzeigevorrichtung, welcher durch Multiplikation der zuvor ermittelten Kennzahlen gebildet wird,

**dadurch gekennzeichnet,**

- **dass** die Kennzahl der Auftrittswahrscheinlichkeit in Abhängigkeit der Zeitdauer der Belastung einer Funktionseinheit l innerhalb verschiedener Belastungsklassen i einer Fehlerursache n eines Fehlers m ermittelt wird.

**2.** Verfahren nach Anspruch 1, **dadurch gekennzeichnet, dass** eine stetige Überwachung der Fehlerursachen durchgeführt wird.

**3.** Verfahren nach Anspruch 1, **dadurch gekennzeichnet, dass** bei der Initialisierung der Fehlerursachen eine Übernahme von Funktionseinheiten l, von Fehlern m und dazugehörigen Fehlerursachen n aus einer FMEA (Fehler-Möglichkeits- und Einfluss-Analyse) durchgeführt wird.

**4.** Verfahren nach Anspruch 1, **dadurch gekennzeichnet, dass** die Kennzahl für die Auftrittswahrscheinlichkeit nach der Formel

$$P_{Almn} = 10\text{-}9 \cdot e\text{-} \frac{\sum_{i=}^{q} a_{lmnl} \cdot \cdot t_{lmn}}{T_{imn}} b_{imn}, Wertebereich: \{1 \ldots 10\}$$

ermittelt wird.

**5.** Verfahren nach Anspruch 1, **dadurch gekennzeichnet, dass** die Kennzahl für die Wahrscheinlichkeit des Entdeckens der Einflussgröße/Fehlerursache aus einem Zahlenbereich ermittelt wird, der eine graduelle Einstufung für eine automatische Entdeckung mittels Sensoren und Geräten zur Erfassung von Signalen umfasst.

**6.** Verfahren nach Anspruch 1, **dadurch gekennzeichnet, dass** die Wahrscheinlichkeit des Entdeckens einer Fehlerursache n eines Fehlers m in Abhängigkeit der Übereinstimmung der Fehlerursache n mit der berechneten höchsten Auftrittswahrscheinlichkeit des Fehlers m mit der mittels eines Algorithmus zur Fehlerursachendiagnose ermittelten Fehlerursache n berechnet wird.

**7.** Verfahren nach Anspruch 1, **dadurch gekennzeichnet, dass** die Kennzahl für die Bedeutung der Fehlerursache n in Abhängigkeit der mittleren Behebungszeit $MTTR_{lmn}$ einer Fehlerursache n gesetzt wird.

**8.** Verfahren nach Anspruch 1, **dadurch gekennzeichnet, dass** eine Diagnose von Fehlerursachen durchgeführt, bei der ausgehend von einem Zustandsmodell mit einer berechneten Zustandsgröße $q_{lm}$ und einer gemessenen Zustandsgröße in Abhängigkeit $g_{lm}$ einer Gewichtung einer Fehlerursache n durchgeführt wird.

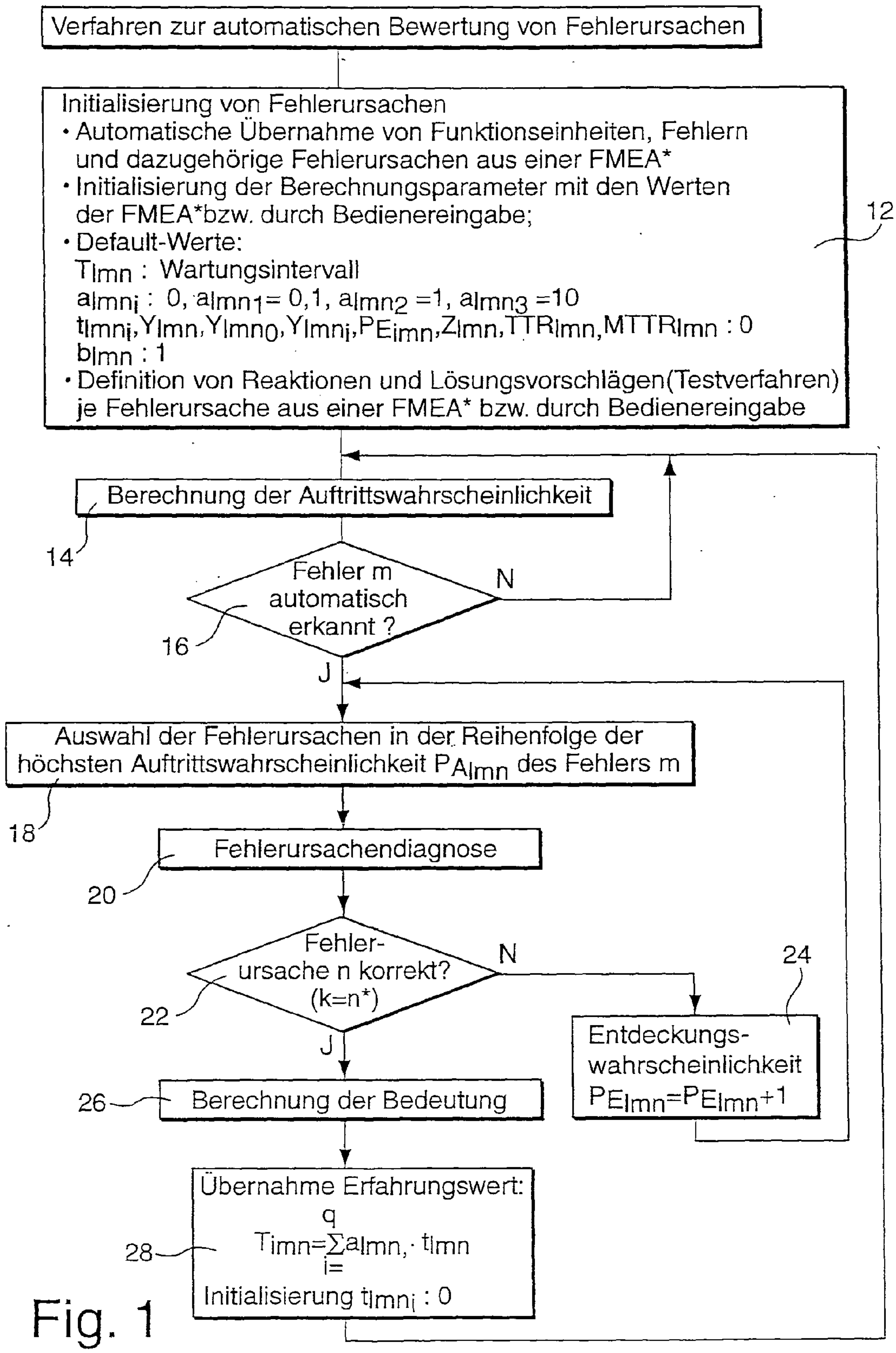

Verfahren zur automatischen Bewertung von Fehlerursachen
Initialisierung von Fehlerursachen
• Automatische Übernahme von Funktionseinheiten, Fehlern und dazugehörige Fehlerursachen aus einer FMEA*
• Initialisierung der Berechnungsparameter mit den Werten der FMEA*bzw. durch Bedienereingabe;
• Default-Werte:
$T_{lmn}$ : Wartungsintervall
$a_{lmni}$ : 0, $a_{lmn1}$= 0,1, $a_{lmn2}$ =1, $a_{lmn3}$ =10
$t_{lmni}$, $Y_{lmn}$, $Y_{lmn0}$, $Y_{lmni}$, $P_{Eimn}$, $Z_{lmn}$, $TTR_{lmn}$, $MTTR_{lmn}$ : 0
$b_{lmn}$ : 1
• Definition von Reaktionen und Lösungsvorschlägen(Testverfahren) je Fehlerursache aus einer FMEA* bzw. durch Bedienereingabe
12
Berechnung der Auftrittswahrscheinlichkeit
14
Fehler m automatisch erkannt ?
16
N
J
Auswahl der Fehlerursachen in der Reihenfolge der höchsten Auftrittswahrscheinlichkeit $P_{Almn}$ des Fehlers m
18
Fehlerursachendiagnose
20
Fehler-ursache n korrekt? (k=n*)
22
N
24
Entdeckungs-wahrscheinlichkeit $P_{Elmn}=P_{Elmn}+1$
J
26
Berechnung der Bedeutung
28
Übernahme Erfahrungswert:
$T_{imn}=\sum_{i=}^{q} a_{lmn,} \cdot t_{lmn}$
Initialisierung $t_{lmni}$ : 0


Fig. 1

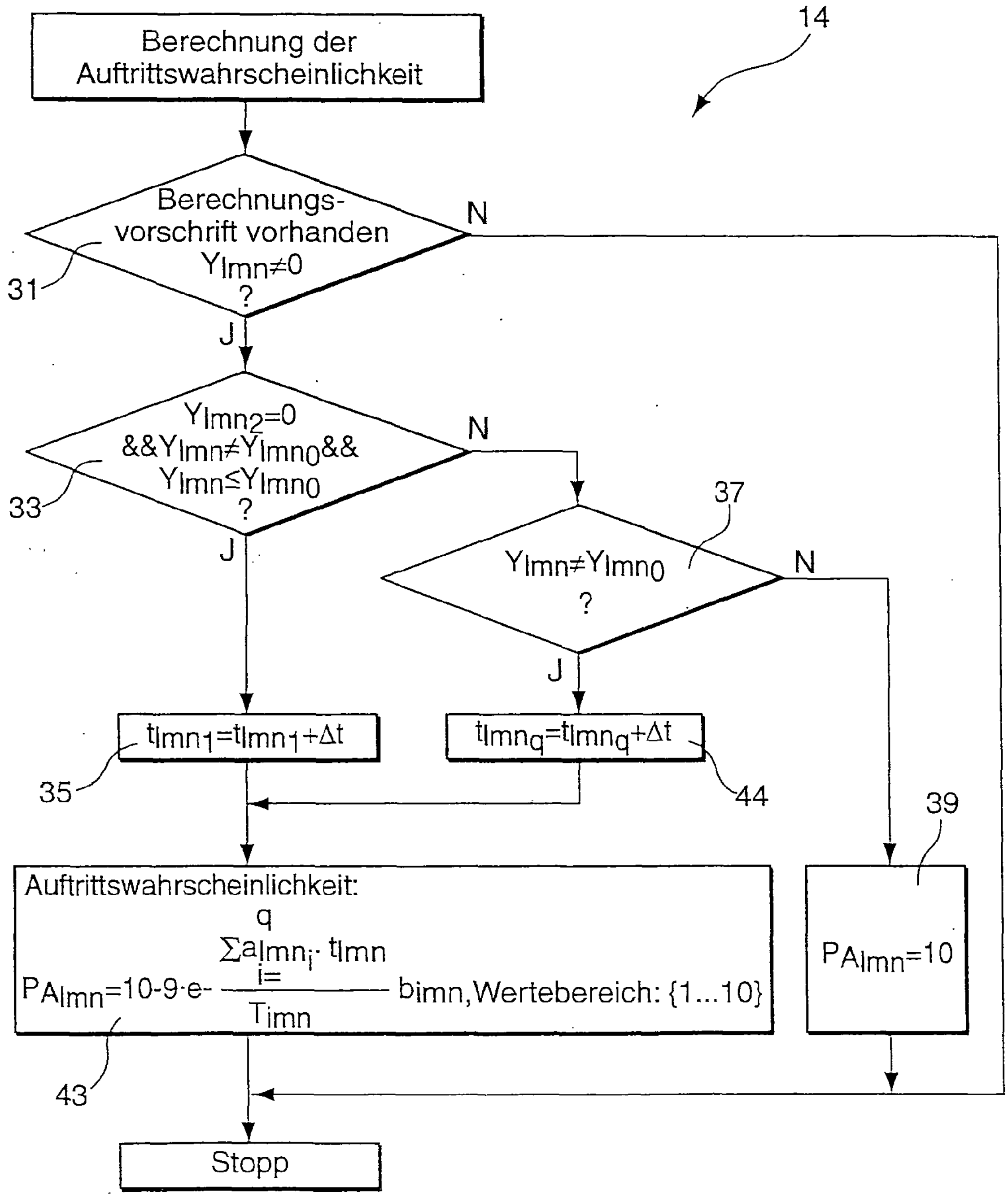
14
Berechnung der Auftrittswahrscheinlichkeit
Berechnungs-vorschrift vorhanden
Ylmn≠0
?
31
N
J
Ylmn2=0
&&Ylmn≠Ylmn0&&
Ylmn≤Ylmn0
?
33
N
J
37
Ylmn≠Ylmn0
?
N
J
tlmn1=tlmn1+Δt
35
tlmnq=tlmnq+Δt
44
39
Auftrittswahrscheinlichkeit:
PAlmn=10-9·e- Σalmni·tlmn / Timn bimn, Wertebereich: {1...10}
43
PAlmn=10
Stopp

Fig. 2

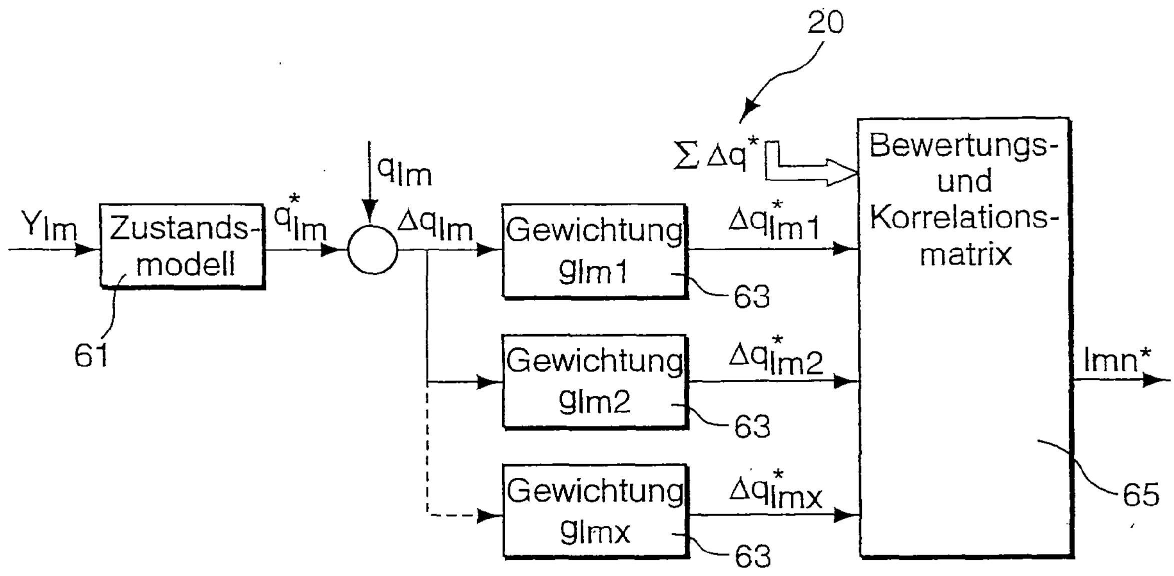
20
Y lm
Zustands-modell
61
q*lm
qlm
Δqlm
Gewichtung glm1
Gewichtung glm2
Gewichtung glmx
63
63
63
Σ Δq*
Δq*lm1
Δq*lm2
Δq*lmx
Bewertungs- und Korrelations-matrix
lmn*
65

Fig. 3

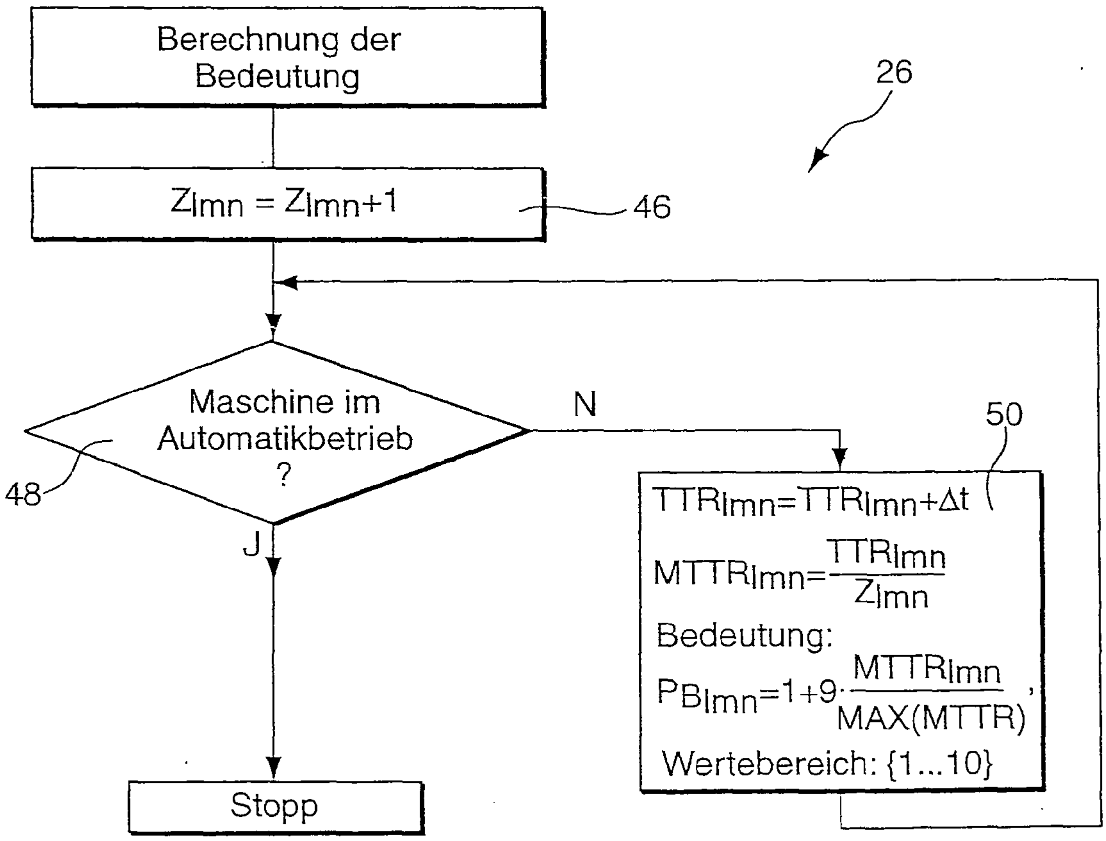
26
Berechnung der Bedeutung
Zlmn = Zlmn+1
46
Maschine im Automatikbetrieb ?
48
N
J
50
TTRlmn=TTRlmn+Δt
MTTRlmn=TTRlmn/Zlmn
Bedeutung:
PBlmn=1+9·MTTRlmn/MAX(MTTR),
Wertebereich: {1...10}
Stopp

Fig. 4

Europäisches Patentamt
European Patent Office
Office européen des brevets

# EUROPÄISCHER RECHERCHENBERICHT

Nummer der Anmeldung
EP 08 01 7253

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | US 2004/205398 A1 (OSBORN MARK DAVID [US] ET AL) 14. Oktober 2004 (2004-10-14)<br>* Seite 2, Absatz 21 - Seite 10, Absatz 66 *<br>----- | 1-3<br><br>4-9 | INV.<br>G05B23/02 |
| A | EP 1 845 429 A (OMRON TATEISI ELECTRONICS CO [JP]) 17. Oktober 2007 (2007-10-17)<br>* das ganze Dokument *<br>----- | 1 | |
| | | | RECHERCHIERTE SACHGEBIETE (IPC) |
| | | | G05B |

Der vorliegende Recherchenbericht wurde für alle Patentansprüche erstellt

| Recherchenort | Abschlußdatum der Recherche | Prüfer |
|---|---|---|
| München | 2. März 2009 | Kuntz, Jean-Marc |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 08 01 7253

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2009

| Im Recherchenbericht angeführtes Patentdokument | Datum der Veröffentlichung | Mitglied(er) der Patentfamilie | Datum der Veröffentlichung |
|---|---|---|---|
| US 2004205398 A1 | 14-10-2004 | DE 102004015504 A1 | 04-11-2004 |
| EP 1845429 A | 17-10-2007 | CN 101055636 A | 17-10-2007 |
| | | JP 2007280301 A | 25-10-2007 |
| | | KR 20070101128 A | 16-10-2007 |
| | | US 2008034258 A1 | 07-02-2008 |

EPO FORM P0461

Für nähere Einzelheiten zu diesem Anhang : siehe Amtsblatt des Europäischen Patentamts, Nr.12/82